# EUROPÄISCHE PATENTANMELDUNG

(11) **EP 4 040 447 A2**
(43) Veröffentlichungstag der Anmeldung: **10.08.2022**
(21) Anmeldenummer: 21214976.9
(22) Anmeldetag: 16.12.2021
(51) Int. Cl.: G21K 1/02, G21K 1/04

(54) **VERSTELLBARER SEGMENTIERTER KOLLIMATOR**

(30) Priorität: 09.02.2021 DE 102021103037
(71) Anmelder: Bruker AXS GmbH, 76187 Karlsruhe (DE)
(72) Erfinder: Filsinger, Frank, 76137 Karlsruhe (DE); Hammerschmid, Gerhard, 76187 Karlsruhe (DE)
(74) Vertreter: Kohler Schmid Möbus Patentanwälte

(57) **Zusammenfassung**

Eine Kollimator-Anordnung (10) für ein Röntgen-optisches System mit einer Sollerblende zur Kollimation von Röntgenstrahlung bezüglich der Richtung einer Achse (z) der Sollerblende, wobei die Sollerblende eine Vielzahl von zueinander beabstandeten Lamellen (11) mit untereinander parallelen Lamellenebenen aufweist, ist dadurch gekennzeichnet, dass die Sollerblende eine Mehrzahl entlang der Achse angeordneter, voneinander getrennter Segmente (12a, 12b, 12c, 12d, ...) umfasst, dass die Anordnung einen Kollimator-Rahmen (13) zur Einfassung und Führung der Segmente aufweist, und dass mindestens eines der Segmente gegenüber dem Rahmen sowie relativ zu anderen Segmenten verschiebbar ist. Damit wird eine einfache, aber dennoch zielgenaue Anpassung der spektralen Auflösung eines Röntgenspektrometers an eine jeweils unterschiedliche analytische Anwendung in einer kompakten und kostengünstigen Weise ermöglicht.

## Beschreibung

Die Erfindung betrifft eine Kollimator-Anordnung für ein Röntgen-optisches System mit einer Sollerblende zur Kollimation von Röntgenstrahlung bezüglich der Richtung einer Achse der Sollerblende, wobei die Sollerblende eine Vielzahl von zueinander beabstandeten Lamellen mit untereinander parallelen Lamellenebenen aufweist.

Eine solche Kollimator-Anordnung ist bekannt aus EP 2 194 375 B1 (=Referenz [1]).

### Hintergrund der Erfindung

Röntgenmessungen, insbesondere Röntgenspektrometrie und Röntgendiffraktometrie, werden zur qualitativen und quantitativen chemischen Analyse sowie zur Strukturanalyse von Proben in verschiedenen Anwendungsgebieten eingesetzt. Je nach analytischer Aufgabenstellung ist eine andere Winkelauflösung des Aufbaus erforderlich und ein schnelles Wechseln zwischen Messungen mit verschiedener Winkelauflösung ist wünschenswert.

In herkömmlichen Röntgenspektrometern zur Röntgenfluoreszenzanalyse wird die Winkelauflösung normalerweise über Primärkollimatoren eingestellt, welche meist als Sollerblende ausgeführt sind. Bereits in der DE 30 00 122 A1 (= Referenz [2]) ist ein solcher Kollimator mit Parallellamellenanordnung beschrieben. In der Regel werden mehrere Kollimatoren mit verschiedenen Lamellenabständen verbaut. Je nach analytischer Anforderung wird ein geeigneter Kollimator mit einem motorisierten Antrieb im Strahlenpfad platziert, um die benötigte Winkelauflösung einzustellen und so die spektrale Auflösung des Aufbaus an die analytische Aufgabe anzupassen.

Aus der_US 2011/0081004 A1 (= Referenz [7]) ist eine FASC (fixed angle secondary collimator) Anordnung mit einer Basisplatte bekannt, die Schlitze zur festen Aufnahme von gleichartigen Platten aufweist. Jede Platte umfasst dabei Trennwände und Schlitze, durch die die Röntgenstrahlung hindurchtreten kann.

DE 10 2017 223 228 B3 (= Referenz [8]) beschreibt ein Röntgenspektrometer mit einer modifizierten Sollerblende, bei welcher die Lamellen eine Vielzahl von schlitzförmigen Durchgängen bilden, wobei bei einem Teil der von den Lamellen gebildeten Schlitzen senkrecht zu den Schlitzen ausgerichtete Trennwände vorhanden sind, die für Röntgenstrahlung undurchlässig sind und die Querdivergenz der durch die Kollimatoranordnung hindurchtretenden Röntgenstrahlung in einer Richtung quer zur Beugungsebene der von der Probe kommenden Röntgenstrahlung einschränken. Damit können deutlich schnellere ortsaufgelöste Messungen durchgeführt werden.

### Anordnung mit mehreren Kollimatoren

Beim Röntgenspektrometer "Bruker S8 TIGER" (siehe Referenzen [3a], [3b]), in welchem als Sollerblende ausgeführte Kollimatoren eingesetzt werden, ist diese Aufgabe mit einem Kollimatorwechsler realisiert, bei dem vier verschiedene Kollimatoren in einer Trommel angeordnet sind. Mit Hilfe eines motorisierten Antriebs kann jeweils einer der Kollimatoren abwechselnd in den Strahlengang rotiert werden.

Beim Röntgenspektrometer "Rigaku ZSX Primus IV" (siehe YouTube Werbevideo Referenz [4]) sind drei Kollimatoren nebeneinander angeordnet, die über einen linearen Verschiebemechanismus abwechselnd im Strahlengang positioniert werden können.

### Großer Platzbedarf

Um die Effizienz des Röntgenspektrometers zu optimieren, muss der Strahlenpfad möglichst kompakt ausgeführt werden. Zusätzlich sind in modernen Röntgenspektrometern mehrere Sichtlinien auf die Probe unterzubringen. Dies wird durch das große Bauvolumen eines herkömmlichen Kollimator-Wechslers deutlich erschwert.

### Hohe Kosten und hoher Materialeinsatz

Sollerblenden werden aus einzelnen Blechen (Lamellen) aufgebaut. Eine typische Sollerblende besteht aus 40 bis 100 Lamellen, die mit Abstandshaltern verpresst oder verklebt werden. Über den Abstand der Lamellen und die Länge der Sollerblende kann die Winkelauflösung des Kollimators angepasst werden. Der Montageprozess ist meist aufwendig und teuer. Je geringer der Lamellenabstand desto teurer ist die Herstellung, da erheblich mehr Material benötigt wird. Pro gewünschter Winkelauflösung muss ein separater Kollimator gefertigt und im Spektrometer verbaut werden. Somit sind mit herkömmlichen Lösungen hohe Kosten aufgrund eines höheren Materialeinsatzes verbunden.

Statt mehrere Kollimatoren zu verbauen und diese abwechselnd in den Strahlengang zu schieben, wurde in der JP 6308293 A (= Referenz [5]) ein verkippbarer Kollimator vorgestellt.

Nachteilig ist hier jedoch, dass sich die Querschnittsfläche und somit das Sichtfeld auf die Probe mit der Verkippung ändert. Mit kleinerem Lamellenabstand (und mithin besserer Auflösung) wird die nutzbare Höhe im selben Verhältnis kleiner.

In der US 6,444,993 B1 (= Referenz [6]) wird eine variable Sollerblende vorgestellt, bei der der Lamellenabstand konstant bleibt und die Anpassung der Auflösung über eine variable Länge der Sollerblende entlang der Strahlrichtung erfolgt.

Nachteilig bei der Anordnung nach Referenz [6] ist einerseits der große Platzbedarf rund um den Strahlenpfad. Typische Probendurchmesser in einem XRF-Spektrometer sind ~4 cm. Der Strahlenpfad muss einen repräsentativen Teil der Oberfläche abdecken und hat typischerweise eine Querschnittsfläche von ~6 cm². Die in Referenz [6] skizzierte Sollerblende erfordert senkrecht zur Ausbreitungsrichtung deutlich mehr Platz als die eigentliche Querschnittsfläche des Strahlenpfads. Andererseits ist nachteilig, dass sich die Winkelauflösung der Sollerblende (hier die Länge entlang der Strahlrichtung) über die Querschnittsfläche des Strahlenpfades ändert. Damit ist die Winkelauflösung für verschiedene Bereiche der Probe unterschiedlich, was die Auswertung der analytischen Ergebnisse deutlich erschwert.

Aus der eingangs zitierten Referenz [1] ist ein hinsichtlich der vorliegenden Erfindung ein generisches röntgenoptisches Element mit einer Sollerblende bekannt, welches mehrere zueinander beabstandete Lamellen mit untereinander parallelen Lamellenebenen zum Kollimieren eines Röntgenstrahls bezüglich der Richtung der Achse der Sollerblende umfasst. Das oben geschilderte Problem einer einfachen Anpassung der spektralen Auflösung des Röntgenspektrometers an unterschiedliche analytische Anwendungen bleibt bestehen.

### Aufgabe der Erfindung

Der vorliegenden Erfindung liegt demgegenüber die Aufgabe zugrunde, eine modifizierte Kollimator-Anordnung mit einer Sollerblende der eingangs definierten Art vorzuschlagen, mittels welcher eine einfache, aber dennoch zielgenaue Anpassung der spektralen Auflösung eines Röntgenspektrometers an eine jeweils unterschiedliche analytische Anforderung in einer kompakten und kostengünstigen Weise ermöglicht wird.

### Kurze Beschreibung der Erfindung

Diese -im Detail betrachtet relativ anspruchsvolle und komplexe- Aufgabe wird durch die vorliegende Erfindung auf ebenso überraschend einfache wie wirkungsvolle Weise dadurch gelöst, dass die Sollerblende eine Mehrzahl entlang der Achse angeordneter, voneinander getrennter Segmente umfasst, dass die Kollimator-Anordnung einen Kollimator-Rahmen zur Einfassung und Führung der Segmente aufweist, und dass mindestens eines der Segmente gegenüber dem Kollimator-Rahmen sowie relativ zu anderen Segmenten der Sollerblende verschiebbar ist.

Die Erfindungsaufgabe wird also durch einen segmentierten Kollimator gelöst, wobei eines oder mehrere Segmente des Kollimators -in der Regel senkrecht- zu den Lamellen verschoben werden können. Verschiebt man die Hälfte der Segmente um einen halben Lamellenabstand, so verbessert sich die Winkelauflösung ungefähr um einen Faktor zwei. Verschiebt man je ein Drittel der Segmente um ca. 1/3 des Lamellenabstands und ein Drittel der Segmente um ca. 2/3 des Lamellenabstands, so verbessert sich die Winkelauflösung ungefähr um einen Faktor drei. Die Grundidee der Erfindung basiert auf der Erkenntnis, dass für die Funktionalität eines Kollimators die Lamellen entlang der Strahlrichtung nicht unbedingt durchgängig sein müssen. Es darf lediglich keine Sichtlinien durch den Kollimator geben, bei denen der Eingang in den Kollimator und der Ausgang aus dem Kollimator zwischen verschiedenen Lamellen erfolgt.

Das röntgenoptische System, in welchem die erfindungsgemäße Kollimator-Anordnung eingesetzt wird, ist ausgestattet mit einer Röntgen-Quelle, von der Röntgenstrahlung als Primärstrahl auf eine zu untersuchende Probe geführt wird, mit einem Röntgen-Detektor zum Empfang von an der Probe gebeugter oder gestreuter Röntgenstrahlung, wobei zwischen der Probe und dem Röntgen-Detektor die Kollimator-Anordnung und ein dispersives Element (z.B. ein Kristall oder ein Gitter) zur spektralen Analyse der Röntgenstrahlung vorhanden sind.

### Hauptvorteile der erfindungsgemäß modifizierten Kollimator-Anordnung gegenüber dem Stand der Technik:

1. **Kompakte Bauweise:** Im Bauraum, der einem Kollimator mit fester Winkelauflösung entspricht, können mehrere verschiedene Winkelauflösungen realisiert werden. Es ist lediglich eine Verschiebung um einen Bruchteil des Lamellenabstands erforderlich (< 1mm) (insbesondere Vorteil gegenüber Referenzen [3a] bis [6]).
2. **Kostengünstige und Materialsparende Bauweise:** Bisher steigen Kosten und Materialeinsatz umso mehr, je besser die Winkelauflösung eines Kollimators sein soll. Für feinere Kollimatoren werden mehr Einzelbleche benötigt. Im erfindungsgemäßen Ansatz entspricht der Materialeinsatz für alle realisierten Winkelauflösungen dem des gröbsten (und somit günstigsten) Kollimators (insbesondere Vorteil gegenüber Referenzen [3a] bis [4]).
3. Die **Querschnittsfläche** und der **sichtbare Bereich auf der Probe** bleibt bei allen Einstellungen der Segmente **konstant** (insbesondere Vorteil gegenüber Referenz [5]).
4. Die **Winkelauflösung** über die gesamte Querschnittsfläche des Strahlenpfads ist **konstant** (insbesondere Vorteil gegenüber Referenz [6]).

### Bevorzugte Ausführungsformen und Weiterbildungen der Erfindung

Eine in der Praxis besonders bevorzugte Klasse von Ausführungsformen der erfindungsgemäßen Kollimator-Anordnung zeichnet sich dadurch aus, dass die Sollerblende mindestens drei, vorzugsweise mehr als drei, Segmente aufweist, wobei mindestens eines, insbesondere mehrere, der Segmente jeweils entlang seiner Segmentrichtung beziehungsweise ihrer Segmentrichtungen senkrecht zur Lamellenebene relativ zum Kollimator-Rahmen verschiebbar angeordnet ist/sind. Eine günstige Weiterbildung dieser Klasse von Ausführungsformen ist dadurch gekennzeichnet, dass die Segmentrichtungen aller Segmente der Sollerblende gleich orientiert sind, oder dass die Segmentrichtungen einiger Segmente um 90° verdreht gegen die Segmentrichtungen anderer Segmente angeordnet sind. Bei gleicher Orientierung der Segmentrichtungen lässt sich die spektrale Auflösung feiner verstellen. Bei einer um 90° verdrehten Anordnung einiger Segmente kann man bei Verschiebung der Segmente eine variable Ortscodierung der transmittierten Röntgenstrahlen erreichen, indem die räumliche Divergenz senkrecht zur Beugungsrichtung eingeschränkt und damit eine höhere Ortsauflösung erzielt wird.

Bei vorteilhaften Weiterbildungen dieser Kollimator-Anordnung weisen die Segmente in Segmentrichtung jeweils die gleichen äußeren Abmessungen auf. Dies ermöglicht eine kompakte und gleichmäßige Bauform.

Bevorzugt sind auch Ausführungsformen der erfindungsgemäßen Kollimator-Anordnung, bei welchen die Segmente in Richtung der Achse der Sollerblende jeweils die gleichen äußeren Abmessungen aufweisen. Hierdurch wird eine gleichmäßige Wirkungsweise der Segmente erreicht. Die gleiche Verschiebung äquivalenter Segmente hat die gleiche Wirkung.

Bei weiteren vorteilhaften Ausführungsformen haben die Lamellen in jedem Segment der Sollerblende jeweils den gleichen Abstand voneinander. Auch hierdurch wird eine gleichmäßige Wirkungsweise der Segmente erreicht.

Günstig sind auch Ausführungsformen der Erfindung, die sich dadurch auszeichnen, dass die verschiebbaren Segmente mit-insbesondere elektromechanischen, elektromagnetischen oder pneumatischen- Aktuatoren gekoppelt sind, welche die Verschiebung der Segmente bewirken können. Denkbar ist auch eine manuelle Verstellung. Durch Aktuatoren ist die automatisierte Änderung der Wirkung der Kollimator-Anordnung möglich. Bevorzugt ist auch eine Klasse von Ausführungsformen der erfindungsgemäßen Kollimator-Anordnung, bei welcher die verschiebbar angeordneten Segmente der Sollerblende jeweils entlang einer Segmentrichtung senkrecht zur Lamellenebene relativ zum Kollimator-Rahmen federnd gelagert sind. Eine federnde Lagerung der verschiebbar angeordneten Segmente sorgt dafür, dass diese sich im Kollimator-Rahmen jederzeit in einer wohldefinierten Position befinden.

Diese Ausführungsformen können bei Weiterbildungen dadurch verbessert werden, dass die federnd gelagerten Segmente der Sollerblende in einer Grundposition derart angeordnet sind, dass sie mit ihrem jeweiligen Segmentboden gegen den Kollimator-Rahmen gedrückt werden. Durch die einheitliche Anordnung der Federungen wird eine einheitliche Grundposition der verschiebbar gelagerten Segmente erreicht. Zudem wird die Bauweise der Kollimator-Anordnung vereinfacht, da die Segmente inklusive der Federungen gleichartig aufgebaut sind.

In besonders günstigen Varianten umfasst die Kollimator-Anordnung mindestens ein Stempelelement mit mindestens einem Stößel, welches durch eine Öffnung des Kollimator-Rahmens den Segmentboden eines oder mehrerer verschiebbarer Segmente kontaktieren und diese aus der Grundposition in eine Stellposition verschieben kann, insbesondere derart, dass ein vordefiniertes Stellmuster der Segmente erreicht wird. Durch Stößel wird ein Durchgriff durch den Kollimator-Rahmen erreicht, so dass die Segmente von außerhalb des Kollimator-Rahmens verstellt werden können. Bei Zusammenfassung mehrerer Segmente mit einem Stößel lässt sich zudem eine vordefinierte Codierung eines Stellmusters der Segmente erreichen.

Diese Varianten der erfindungsgemäßen Kollimator-Anordnung können noch dadurch weiter verbessert werden, dass jedes Stempelelement einen Kragen aufweist, der zur genauen Positionierung der Segmente in der Stellposition gegen den Rand der Öffnung des Kollimator-Rahmens stoßen kann. Hierdurch wird gewährleistet, dass kein Stempelelement zu weit in den Kollimator-Rahmen hineingeschoben wird. Der Kragen stellt gewissermaßen einen Endanschlag für das Stempelelement dar und reduziert die Präzisionsanforderungen an den Aktuator des Verstellmechanismus.

Alternativ oder ergänzend kann jedes Stempelelement mehrere Stößel umfassen, wobei die Stößel in Segmentrichtung verschiedene Höhen zur unterschiedlichen Positionierung der verschiebbaren Segmente aufweisen. Durch Zuordnung mehrerer Stößel zu einem Stempelelement kann eine vereinfachte Verstellung der Segmente erreicht werden, da nur ein Stempelelement für die Bewegung mehrerer Segmente bewegt werden muss. Weisen die Stößel unterschiedliche Höhen auf, kann hierdurch ein differenziertes Stellmuster der Segmente erreicht werden.

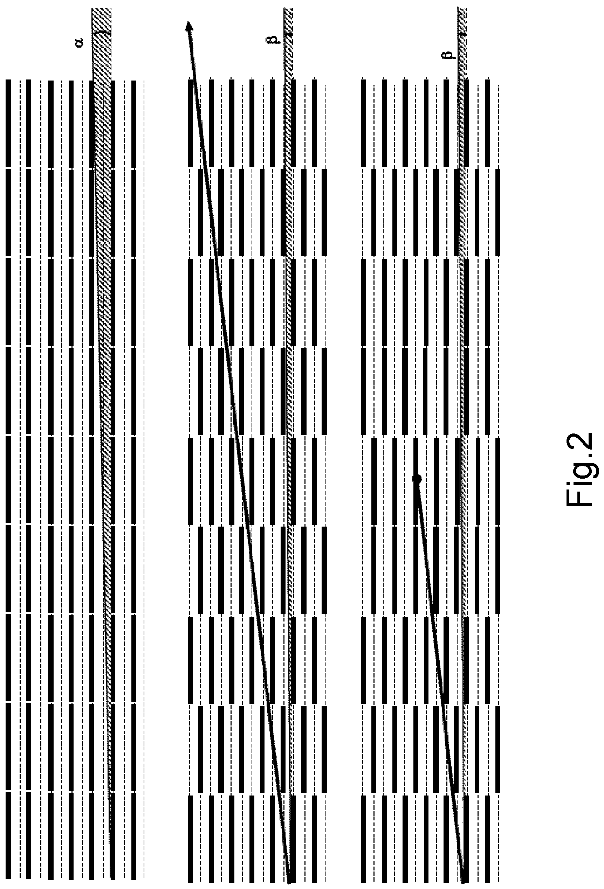

Weitere Varianten sind dadurch gekennzeichnet, dass die Kollimator-Anordnung mehrere Stempelelemente umfasst, die unabhängig voneinander bewegt werden können, wobei insbesondere mit deren Einbringung in die Andruckposition unterschiedliche Stellmuster der Segmente erreicht werden können. Hierdurch können wahlweise die in Fig. 2 dargestellten Stellmuster eingestellt und mehr als zwei Konfigurationen unterschiedlicher Auflösung realisiert werden.

Vorteilhaft sind auch Varianten der erfindungsgemäßen Kollimator-Anordnung mit pneumatischer Betätigung, die sich dadurch auszeichnen, dass der Kollimator-Rahmen unterhalb eines Stempelelements eine Aufnahme für einen flexiblen Schlauch umfasst, der sich durch Beaufschlagung mit einem Gasdruck ausdehnen und das Stempelelement von der Grundposition in die Stellposition verschieben kann. Die Verwendung einer pneumatischen Betätigung vermeidet ein Einbringen elektrischer Elemente in die Kollimator-Anordnung, die gegebenenfalls störanfällig und auch teurer wären. Außerdem setzt ein derartiger pneumatischer Antriebsmechanismus kaum Wärme frei, was für die Temperaturstabilität eines Röntgenspektrometers wichtig ist.

Bevorzugt ist schließlich auch eine Variante der erfindungsgemäßen Kollimator-Anordnung, bei welcher benachbarte Segmente, die durch ein Stempelelement gemeinsam um eine gleiche Strecke d verschiebbar sind oder nicht verschiebbar gestaltet sind, jeweils in einer Segmentgruppe zusammengefasst sind. Durch die Zusammenfassung von Segmenten zu Segmentgruppen ist die Herstellung der erfindungsgemäßen Kollimator-Anordnung kostengünstiger.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert.

Es zeigen:
- Fig. 1a: eine räumliche Darstellung einer Ausführungsform der erfindungs-gemäßen Kollimator-Anordnung in Draufsicht von schräg oben;
- Fig. 1b: einen Vertikalschnitt durch die Ausführungsform nach Fig. 1a;
- Fig. 2: einen schematischen Vertikalschnitt durch eine erfindungsgemäße Kollimator-Anordnung in drei verschiedenen Stellmustern: oben: unverschobene Ausgangsstellung (grobe Auflösung), Mitte: jedes zweite Segment gleichmäßig verschoben, unten: Asymmetrie in der Abfolge von ausgelenkten und unverschobenen Segmenten;
- Fig. 3a: einen schematischen Vertikalschnitt durch eine Ausführungsform der erfindungsgemäßen Kollimator-Anordnung in unverschobener Ausgangsstellung der Segmente links: Frontalansicht in Richtung der z-Achse, rechts: Seitenansicht entlang der Schnittlinie A-A parallel zur zAchse;
- Fig. 3b: Ausführungsform wie Fig. 3a, jedoch in einem Stellmuster mit ausgelenkten Segmenten;
- Fig. 4a: einen schematischen Vertikalschnitt durch eine Ausführungsform der erfindungsgemäßen Kollimator-Anordnung in Frontalansicht in Richtung der z-Achse in unverschobener Ausgangsstellung der Segmente;
- Fig. 4b: Ausführungsform wie Fig. 4a, jedoch in einer Betriebsstellung mit ausgelenkten Segmenten;
- Fig. 5a: einen schematischen Vertikalschnitt durch eine Ausführungsform der erfindungsgemäßen Kollimator-Anordnung in Frontalansicht in Richtung der z-Achse mit einem zentralen und zwei flankierenden äußeren Stempeln;
- Fig. 5b: Ausführungsform wie Fig. 1a; und
- Fig. 5c: eine räumliche Darstellung eines Kollimator-Rahmens mit Einfräsungen für Schläuche eines pneumatischen Aktuators für eine erfindungsgemäße Kollimator-Anordnung in Draufsicht von oben.

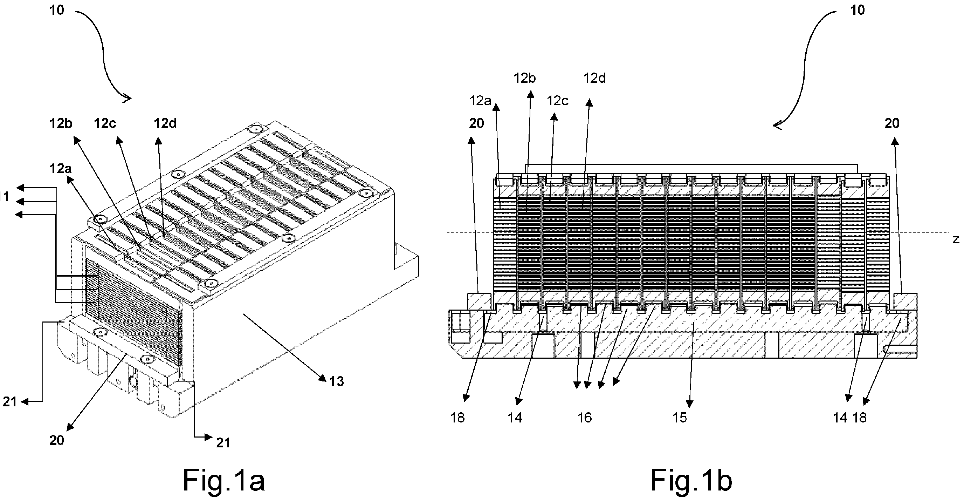

Die Figuren 1a bis 5c der Zeichnung zeigen jeweils in mehr oder minder schematischen Ansichten in unterschiedlichem Detail bevorzugte Ausführungsformen der erfindungsgemäßen **Kollimator-Anordnung 10.** Diese ist Bestandteil eines -in der Zeichnung nicht näher dargestellten- Röntgen-optischen Systems mit einer Sollerblende zur Kollimation von Röntgenstrahlung bezüglich der Richtung einer **Achse z** der Sollerblende parallel zur Ausbreitungsrichtung der Röntgenstrahlung, wobei die Sollerblende eine Vielzahl von zueinander beabstandeten **Lamellen 11** mit untereinander parallelen Lamellenebenen aufweist.

Die erfindungsgemäße Kollimator-Anordnung 10 zeichnet sich dadurch aus, dass die Sollerblende eine Mehrzahl entlang der Achse z angeordneter, voneinander getrennter **Segmente 12a, 12b, 12c, 12d,** ... umfasst. Zur Einfassung und Führung der Segmente 12a, 12b, 12c, 12d, ... weist die Kollimator-Anordnung 10 einen **Kollimator-Rahmen 13** auf. Mindestens eines, in der Regel aber mehrere der Segmente 12a, 12b, 12c, 12d, ... sind gegenüber dem Kollimator-Rahmen 13 sowie relativ zu anderen Segmenten der Sollerblende verschiebbar und zwar bevorzugt entlang ihrer Segmentrichtungen senkrecht zur Lamellenebene relativ zum Kollimator-Rahmen 13.

Bei den in der Zeichnung dargestellten Ausführungsformen der erfindungsgemäßen Kollimator-Anordnung 10 sind die Segmentrichtungen aller Segmente 12a, 12b, 12c, 12d, ... der Sollerblende gleich orientiert.

Außerdem weisen die Segmente 12a, 12b, 12c, 12d, ... bei den Ausführungsformen der Zeichnung in Segmentrichtung sowie auch in Richtung der z-Achse der Sollerblende jeweils die gleichen äußeren Abmessungen auf und die Lamellen 11 in jedem Segment 12a, 12b, 12c, 12d, ... der Sollerblende haben jeweils den gleichen Abstand voneinander. Bei in der Zeichnung nicht eigens dargestellten Ausführungsformen können aber auch unterschiedlich breite Segmente verwendet werden, z.B. indem man benachbarte gemeinsam verschobene beziehungsweise nicht verschobene Segmente zusammenfasst. Außerdem können nicht verschobene Elemente auch fest am Kollimator-Rahmen 13 fixiert sein.

Die Segmente 12a, 12b, 12c, 12d, ... der Sollerblende können z.B. mittels additiver Fertigungsverfahren -etwa 3D-Druck- oder durch Zerschneiden -beispielsweise Drahterodieren- eines herkömmlichen geklebten Kollimators hergestellt werden. Letzteres erlaubt eine kostengünstige und kraftfreie Bearbeitung und ist von Vorteil bezüglich der Fertigungstoleranzen, da alle Segmente aus einem Ausgangsbauteil hergestellt werden.

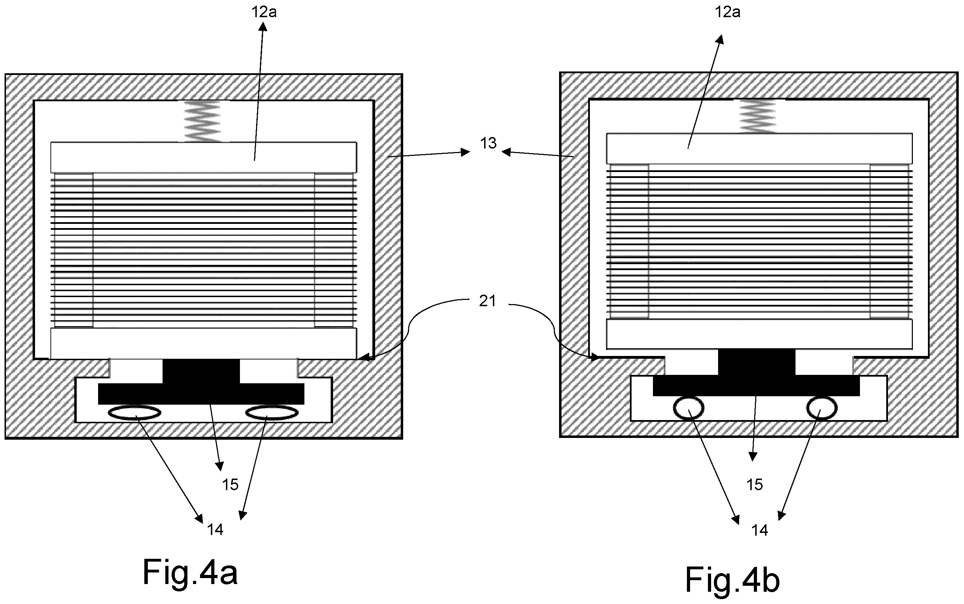

Die verschiebbaren Segmente 12a, 12b, 12c, 12d, ... können mit elektromechanischen, elektromagnetischen oder pneumatischen **Aktuatoren 14** gekoppelt sein, welche die Verschiebung der Segmente 12a, 12b, 12c, 12d, ... bewirken. Insbesondere in den Figuren 4a bis 5a sind **Schlauchteile 14'** eines pneumatischen Aktuators 14 dargestellt.

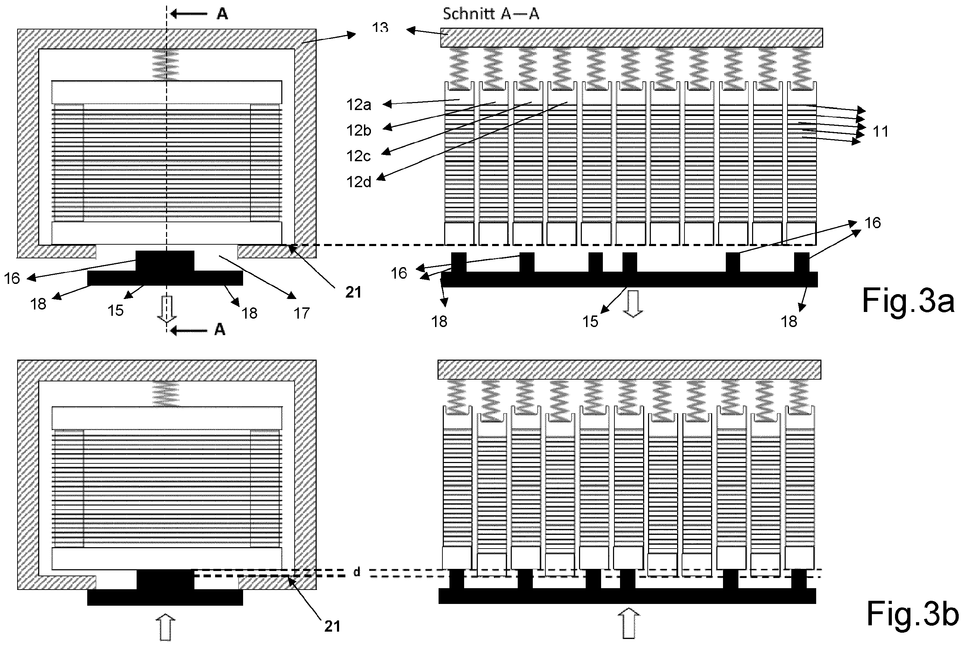

Wie bei den Ausführungsformen der Figuren 3a bis 4b gezeigt, können die verschiebbar angeordneten Segmente 12a, 12b, 12c, 12d, ... der Sollerblende jeweils entlang einer Segmentrichtung senkrecht zur Lamellenebene relativ zum Kollimator-Rahmen 13 federnd gelagert und in einer Grundposition derart angeordnet sein, dass sie mit ihrem jeweiligen Segmentboden gegen den Kollimator-Rahmen 13 gedrückt werden.

Die erfindungsgemäße Kollimator-Anordnung 10 kann -wie aus den Figuren 1b, und 3a bis 5a ersichtlich- mindestens ein **Stempelelement 15; 15'; 15"** mit mindestens einem Stößel 16 umfassen, welches durch eine **Öffnung 17** des Kollimator-Rahmens 13 den Segmentboden eines oder mehrerer verschiebbarer Segmente 12a, 12b, 12c, 12d, ... kontaktieren und diese aus der Grundposition in eine Stellposition verschieben kann, insbesondere derart, dass ein vordefiniertes Stellmuster der Segmente 12a, 12b, 12c, 12d, ... erreicht wird, wie etwa in Fig. 2 gezeigt.

Insbesondere die Figuren 1b und 3a bis 4b zeigen Stempelelemente 15, die jeweils einen **Kragen 18** aufweisen, der zur genauen Positionierung der Segmente 12a, 12b, 12c, 12d, ... in der Stellposition gegen den Rand der Öffnung 17 des Kollimator-Rahmens 13 stoßen kann.

Jedes Stempelelement 15; 15'; 15" kann mehrere Stößel 16 umfassen, die in Segmentrichtung verschiedene Höhen zur unterschiedlichen Positionierung der verschiebbaren Segmente 12a, 12b, 12c, 12d, ... aufweisen können. Die Stempelelemente 15; 15'; 15" können unabhängig voneinander bewegt werden, wobei insbesondere mit deren Einbringung in die Andruckposition unterschiedliche Stellmuster der Segmente 12a, 12b, 12c, 12d, ... ermöglicht werden.

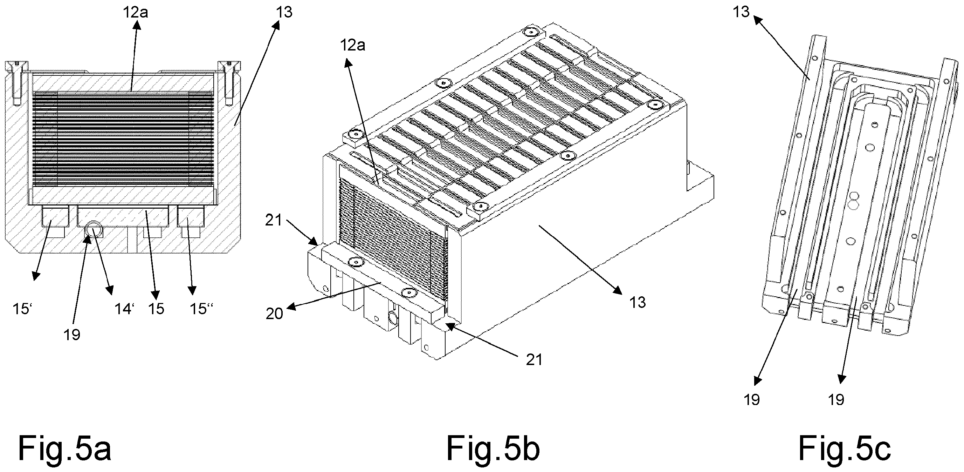

Wie insbesondere in Fig. 5c gut zu erkennen ist, kann der Kollimator-Rahmen 13 unterhalb eines Stempelelements 15 eine **Aufnahme 19** für einen flexiblen Schlauch 14' (siehe Figuren 4a bis 5a) umfassen, der sich durch Beaufschlagung mit einem Gasdruck ausdehnen und das entsprechende Stempelelement 15 von der Grundposition in die Stellposition verschieben kann.

Benachbarte Segmente 12a, 12b, 12c, 12d, ..., die durch ein Stempelelement 15 gemeinsam um eine gleiche **Strecke d** verschiebbar sind oder nicht verschiebbar gestaltet sind, können jeweils in einer Segmentgruppe zusammengefasst sein.

In den Figuren 1a, 1b und 5b ist jeweils ein **Anschlag 20** zur Hubbegrenzung der Segmente 12a, 12b, 12c, 12d, ... dargestellt, der fest mit dem Kollimator-Rahmen 13 verbunden oder Teil desselben ist. Als Ausgangsnormal für die Positionierung der Segmente 12a, 12b, 12c, 12d, ... dient eine **Referenzfläche 21,** auf welcher in der Regel auch der Anschlag 20 aufsitzen wird.

Die Segmentierung der erfindungsgemäßen Kollimator-Anordnung 10 verläuft entlang der Strahlrichtung der Röntgenstrahlung. In einer Ausgangsposition (Fig. 3a, gröbste Auflösung) werden alle Segmente 12a, 12b, 12c, 12d, ... auf der Referenzfläche 21 positioniert, beispielsweise durch die Schwerkraft der Elemente selbst oder unterstützt durch eine Feder. Unterhalb der Segmente 12a, 12b, 12c, 12d, ... ist der bewegliche Stempel 15 zur Auslenkung mehrerer Segmente aus der Referenzfläche 21 positioniert, dem das Muster der zu verschiebenden Elemente eingeprägt ist. In der Ausgangsposition ist der Stempel 15 zurückgezogen (siehe Fig. 3a) und hat keinen Kontakt mit den Segmenten und damit keinen Einfluss auf die Position der Segmente. Soll auf eine feinere Auflösung umgeschaltet werden, so wird der Stempel 15 senkrecht zur Referenzfläche 21 verschoben (siehe Fig. 3b). Durch das dem Stempel 15 eingeprägte Muster werden so mehrere Segmente 12a, 12c, ... um eine Auslenkung d gegenüber der Referenzfläche 21 verschoben. Mit unterschiedlich hohen Stufen des Stößels 16 des Stempels 15 können auch individuelle Auslenkungen für die einzelnen Segmente 12a, 12b, 12c, 12d, ... verwirklicht werden. Segmente 12b, 12d, ..., die nicht vom Stempel angehoben werden, bleiben auf der Referenzfläche 21 stehen. Wählt man die Auslenkung so, dass die Lamellen 11 der ausgelenkten Segmente 12a, 12c, ... mittig zwischen den Lamellen der nicht-ausgelenkten Segmente 12b, 12d, ... platziert werden, so verbessert sich die Winkelauflösung ungefähr um einen Faktor 2 gegenüber dem Ausgangszustand. Wählt man andere Muster und/oder Auslenkungen im Stempel 15, können auch andere Auflösungen realisiert werden. Durch eine asymmetrische Abfolge der verschobenen / nicht-verschobenen Segmente können schräglaufende Sichtlinien -wie anhand von Fig. 2 unten dargestellt - unterdrückt werden.

Verschiedene Betriebspositionen der Verschiebung der Segmente 12a, 12b, 12c, 12d, ... sind schematisch in Fig. 2 gezeigt. Der Schlüssel zum Erreichen der gewünschten Auflösung des Röntgen-optischen Systems ist ein asymmetrisches Muster bei der Verschiebung, welches eine schräg laufende Sichtlinie unterdrückt (siehe insbesondere Fig. 2 unten). Während der Kollimator in der in Fig. 2 oben dargestellten Ausgangsstellung eine grobe Auflösung bewirkt, ist in der Mitte jedes zweite Segment verschoben. Diese Konfiguration funktioniert aber eigentlich nicht gut, da eine schräg durch den Kollimator laufende Sichtlinie existiert, die die Winkelauflösung weiter verschlechtert. In Fig. 2 unten hingegen ist eine Betriebsstellung mit Asymmetrie in der Abfolge der verschobenen und nicht-verschobenen Segmente gezeigt, in welcher die störenden, die Winkelauflösung verschlechternden schrägen Sichtlinien durch den Kollimator unterdrückt sind, so dass eine deutlich verbesserte Auflösung erreicht wird.

### Anforderungen an den Verstellmechanismus bzw. Aktuator:

- Der Verstellmechanismus bzw. Aktuator muss die Segmente um einen Bruchteil des Lamellenabstands reproduzierbar verschieben. Typische Auslenkungen sind im Bereich von 0.1 mm - 1 mm. Die Reproduzierbarkeit ist wichtig, da sonst die spektrale Auflösung des Röntgenspektrometers von Messung zu Messung schwankt.
- Der Kollimator befindet sich in der Regel in einer Vakuumkammer, deren Temperatur stabilisiert ist. Der Verstellmechanismus bzw. Aktuator sollte daher vakuumtauglich sein und möglichst wenig Wärme entwickeln.
- Da der Kollimator in einer typischen Anwendung mehrmals pro Messung verstellt werden muss, sollte der Mechanismus bzw. Aktuator viele 100000 Zyklen aushalten
- Da sich der Verstellmechanismus bzw. Aktuator in der Nähe des Strahlenpfads befindet, sollte er eine kompakte Bauweise haben.

Der Verstellmechanismus bzw. Aktuator ist bei den in den Figuren 4a bis 5a dargestellten Ausführungsformen der Erfindung über einen flexiblen Schlauch 14' unter dem beweglichen Stempel 15 realisiert, der sich in der Ausgangsposition im Druckgleichgewicht mit der Umgebung befindet oder einen geringeren Innendruck als die Umgebung aufweist. Das Eigengewicht der Segmente und gegebenenfalls eine zusätzliche Feder komprimieren den Schlauch und pressen alle Segmente 12a, 12b, 12c, 12d, ... auf die Referenzfläche 21. Soll der bewegliche Stempel 15 ausgelenkt werden, wird der Schlauch mit einem Überdruck beaufschlagt und bläht sich leicht auf. Dies bewegt den Stempel 15 und lenkt die gewünschten Segmente aus. Die Amplitude der Stempelbewegung wird durch den Anschlag 20 begrenzt -wie in Fig. 1b gut zu erkennen ist-, so dass die Positionierung reproduzierbar und präzise erfolgt.

### Vorteile des pneumatischen Verstellmechanismus bzw. Aktuators:

- Keine Wärmeentwicklung in der Nähe des Strahlenpfades
- Antrieb über Ventile, flexible Schläuche erlauben gezielte Platzierung des Antriebs an beliebiger Stelle im Gerät; keine mechanische Kopplung über Riemenantrieb o.ä. wie bei herkömmlicher Verstellung über Motor notwendig.

Fig. 4a zeigt in Frontalansicht in Richtung der z-Achse eine Ausführungsform der erfindungsgemäßen Kollimator-Anordnung in unverschobener Ausgangsstellung der Segmente und mit "plattem" Schlauch 14' des pneumatischen Aktuators (im Inneren des Schlauchs 14' herrscht Umgebungsdruck). Der Stempel 15 ist deaktiviert und die Segmente -zu sehen ist hier freilich nur das frontal erste Segment 12a- liegen auf der Referenzfläche 21 des Kollimator-Rahmens 13 auf.

In Fig. 4b hingegen ist der zentrale Stempel 15 mittels des "prall gefüllten" (mit Überdruck aufgeblasenen) Schlauchs 14' aktiviert und die Segmente -wiederum repräsentiert durch das frontal erste Segment 12a- befinden sich in einer ausgelenkten Betriebsstellung mit verbesserter Winkelauflösung der Kollimator-Anordnung 10.

Fig. 5a zeigt eine Ausführungsform der erfindungsgemäßen Kollimator-Anordnung mit einem zentralen Stempel 15 und zwei flankierenden äußeren Stempeln 15', 15" mit anderem (in der Zeichnung nicht erkennbaren) Muster für weitere einstellbare Winkelauflösungen. Auch hier ist eine Aktivierung zumindest des zentralen Stempels 15 durch Aufblasen des Schlauchs 14' eines pneumatischen Aktivators angedeutet, wobei der Schlauch 14' in einer Aufnahmeausnehmung 19 des Kollimator-Rahmens 13 einliegt.

In Fig. 5c schließlich ist eine Ausführungsform des Kollimator-Rahmens 13 zur Halterung der erfindungsgemäß segmentierten Kollimator-Anordnung 10 mit Einfräsungen für zwei Schläuche des -hier nicht gezeigten- Aktuators mit pneumatischem Verstellmechanismus dargestellt.

Da in einem Röntgenspektrometer der Strahlenpfad normalerweise evakuiert ist, ist für den Antrieb lediglich ein 3-Wege-Ventil pro Winkelstellung erforderlich. Der flexible Schlauch kann über das (in der Zeichnung nichts eigens dargestellte) Ventil in der Ausgangsposition mit der Vakuumkammer verbunden werden um ein Druckgleichgewicht herzustellen. Um den Stempel zu bewegen, kann der Schlauch dann einfach über das Ventil belüftet werden (entspricht ca. 1 Bar Überdruck).

### Bezugszeichenliste:

- 10: Kollimator-Anordnung
- 11: Lamellen
- 12a, 12b, 12c, 12d,: Segmente
- 13: Kollimator-Rahmen
- 14: Aktuator
- 14': Schlauchteil eines pneumatischen Aktuators
- 15; 15'; 15": Stempelelemente
- 16: Stößel
- 17: Öffnung des Kollimator-Rahmens
- 18: Kragen
- 19: Aufnahme für einen flexiblen Schlauch
- 20: Anschlag zur Hubbegrenzung der Segmente
- 21: Referenzfläche für die Positionierung der Segmente
- z: Achse der Sollerblende
- d: Auslenkung von Segmenten

### Referenzliste:

Für die Beurteilung der Patentfähigkeit in Betracht gezogene Druckschriften:
[1] DE 10 2008 060 070 B4; EP 2 194 375 B1; US 7,983,389 B2
[2] DE 30 00 122 A1
[3a] Nuclear Instruments and Methods in Physics Research Section B: Beam Interactions with Materials and Atoms. Vol. 414, 2018, p. 84-98 https://doi.org/10.1016/j.nimb.2017.10.027
[3b] https://www.bruker.com/products/x-ray-diffraction-and-elemental-analysis/x-ray-fluorescence/s8-tiger.html
[4] https://www.voutube.com/watch?v=rufCvmeZMvU
[5] JP 6308293 A
[6] US 6,444,993 B1
[7] US 2011/0081004 A1
[8] DE 10 2017 223 228 B3; US 10,794,845 B1; JP 6560812 A

## Patentansprüche

1. Kollimator-Anordnung (10) für ein Röntgen-optisches System mit einer Sollerblende zur Kollimation von Röntgenstrahlung bezüglich der Richtung einer Achse (z) der Sollerblende, wobei die Sollerblende eine Vielzahl von zueinander beabstandeten Lamellen (11) mit untereinander parallelen Lamellenebenen aufweist,
**dadurch gekennzeichnet,**
**dass** die Sollerblende eine Mehrzahl entlang der Achse (z) angeordneter, voneinander getrennter Segmente (12a, 12b, 12c, 12d, ...) umfasst, dass die Kollimator-Anordnung (10) einen Kollimator-Rahmen (13) zur Einfassung und Führung der Segmente (12a, 12b, 12c, 12d, ...) aufweist,
und **dass** mindestens eines der Segmente (12a) gegenüber dem Kollimator-Rahmen (13) sowie relativ zu anderen Segmenten (12b, 12c, 12d, ...) der Sollerblende verschiebbar ist.

2. Kollimator-Anordnung nach Anspruch 1, **dadurch gekennzeichnet, dass** die Sollerblende mindestens drei, vorzugsweise mehr als drei, Segmente (12a, 12b, 12c, 12d, ...) aufweist, wobei mindestens eines, insbesondere mehrere, der Segmente (12a, 12b, 12c, 12d, ...) jeweils entlang seiner Segmentrichtung beziehungsweise ihrer Segmentrichtungen senkrecht zur Lamellenebene relativ zum Kollimator-Rahmen (13) verschiebbar angeordnet ist/sind.

3. Kollimator-Anordnung nach Anspruch 2, **dadurch gekennzeichnet, dass** die Segmentrichtungen aller Segmente (12a, 12b, 12c, 12d, ...) der Sollerblende gleich orientiert sind, oder dass die Segmentrichtungen einiger Segmente (12a, 12b) um 90° verdreht gegen die Segmentrichtungen anderer Segmente (12c, 12d, ...) angeordnet sind.

4. Kollimator-Anordnung nach einem der Ansprüche 2 oder 3, **dadurch gekennzeichnet, dass** die Segmente (12a, 12b, 12c, 12d, ...) in Segmentrichtung jeweils die gleichen äußeren Abmessungen aufweisen.

5. Kollimator-Anordnung nach einem der vorhergehenden Ansprüche
**dadurch gekennzeichnet, dass** die Segmente (12a, 12b, 12c, 12d, ...) in Richtung der Achse (z) der Sollerblende jeweils die gleichen äußeren Abmessungen aufweisen.

6. Kollimator-Anordnung nach einem der vorhergehenden Ansprüche,
**dadurch gekennzeichnet, dass** die Lamellen (11) in jedem Segment (12a, 12b, 12c, 12d, ...) der Sollerblende jeweils den gleichen Abstand voneinander haben.

7. Kollimator-Anordnung nach einem der vorhergehenden Ansprüche,
**dadurch gekennzeichnet, dass** die verschiebbaren Segmente (12a, 12b, 12c, 12d, ...) mit, insbesondere elektromechanischen, elektromagnetischen oder pneumatischen, Aktuatoren (14) gekoppelt sind, welche die Verschiebung der Segmente (12a, 12b, 12c, 12d, ...) bewirken können.

8. Kollimator-Anordnung nach einem der vorhergehenden Ansprüche,
**dadurch gekennzeichnet, dass** die verschiebbar angeordneten Segmente (12a, 12b, 12c, 12d, ...) der Sollerblende jeweils entlang einer Segmentrichtung senkrecht zur Lamellenebene relativ zum Kollimator-Rahmen (13) federnd gelagert sind.

9. Kollimator-Anordnung nach Anspruch 8, **dadurch gekennzeichnet, dass** die federnd gelagerten Segmente (12a, 12b, 12c, 12d, ...) der Sollerblende in einer Grundposition derart angeordnet sind, dass sie mit ihrem jeweiligen Segmentboden gegen den Kollimator-Rahmen (13) gedrückt werden.

10. Kollimator-Anordnung nach Anspruch 9, **dadurch gekennzeichnet, dass** die Kollimator-Anordnung (10) mindestens ein Stempelelement (15; 15'; 15") mit mindestens einem Stößel (16) umfasst, welches durch eine Öffnung (17) des Kollimator-Rahmens (13) den Segmentboden eines oder mehrerer verschiebbarer Segmente (12a, 12b, 12c, 12d, ...) kontaktieren und diese aus der Grundposition in eine Stellposition verschieben kann, insbesondere derart, dass ein vordefiniertes Stellmuster der Segmente (12a, 12b, 12c, 12d, ...) erreicht wird.

11. Kollimator-Anordnung nach Anspruch 10, **dadurch gekennzeichnet, dass** jedes Stempelelement (15; 15'; 15") einen Kragen (18) aufweist, der zur genauen Positionierung der Segmente (12a, 12b, 12c, 12d, ...) in der Stellposition gegen den Rand der Öffnung (17) des Kollimator-Rahmens (13) stoßen kann.

12. Kollimator-Anordnung nach Anspruch 10 oder 11, **dadurch gekennzeichnet, dass** jedes Stempelelement (15; 15'; 15") mehrere Stößel (16) umfasst, und dass die Stößel (16) in Segmentrichtung verschiedene Höhen zur unterschiedlichen Positionierung der verschiebbaren Segmente (12a, 12b, 12c, 12d, ...) aufweisen.

13. Kollimator-Anordnung nach einem der Ansprüche 10 bis 12, **dadurch gekennzeichnet, dass** die Kollimator-Anordnung (10) mehrere Stempelelemente (15; 15'; 15") umfasst, die unabhängig voneinander bewegt werden können, wobei insbesondere mit deren Einbringung in die Andruckposition unterschiedliche Stellmuster der Segmente (12a, 12b, 12c, 12d, ...) erreicht werden können.

14. Kollimator-Anordnung nach einem der Ansprüche 10 bis 13, **dadurch gekennzeichnet, dass** der Kollimator-Rahmen (13) unterhalb eines Stempelelements (15) eine Aufnahme (19) für einen flexiblen Schlauch (14') umfasst, der sich durch Beaufschlagung mit einem Gasdruck ausdehnen und das Stempelelement (15) von der Grundposition in die Stellposition verschieben kann.

15. Kollimator-Anordnung nach einem der Ansprüche 10 bis 14, **dadurch gekennzeichnet, dass** benachbarte Segmente (12a, 12b, 12c, 12d, ...), die durch ein Stempelelement (15) gemeinsam um eine gleiche Strecke d verschiebbar sind oder nicht verschiebbar gestaltet sind, jeweils in einer Segmentgruppe zusammengefasst sind.
